Europäisches Patentamt

European Patent Office

Office européen des brevets

(19)

(11) **EP 0 764 839 A1**

(12) **EUROPÄISCHE PATENTANMELDUNG**

(43) Veröffentlichungstag:
**26.03.1997 Patentblatt 1997/13**

(51) Int. Cl.$^6$: **G01L 19/04**, G01L 9/00

(21) Anmeldenummer: 95114938.4

(22) Anmeldetag: **22.09.1995**

(84) Benannte Vertragsstaaten:
**AT BE CH DE DK ES FR GB GR IE IT LI LU MC NL PT SE**

(71) Anmelder: **Endress + Hauser GmbH + Co.**
**79689 Maulburg (DE)**

(72) Erfinder: **Schleiferböck, Detlef**
**C-79688 Hausen (DE)**

(54) **Druck- oder Differenzdruckmessgerät**

(57) Es ist ein Druck- oder Differenzdruckmeßgerät mit Druckmittler (B, $B_1$, $B_2$) vorgesehen, das einen entlang einer mit einer Füllflüssigkeit gefüllten Leitung (31) des Druckmittlers (B, $B_1$, $B_2$) verlaufenden Widerstandsdraht (32, 32a, 32b) mit einem temperaturabhängigen Gesamtwiderstand ($R_{tot}$, $R_{tot}^1$, $R_{tot}^2$) aufweist, und das ein durch den Gesamtwiderstand ($R_{tot}$, $R_{tot}^1$, $R_{tot}^2$) und ein Sensorsignal ($S_1$, $S_1'$) bestimmtes, bezüglich eines durch die thermische Ausdehnung der Füllflüssigkeit des Druckmittlers (B, $B_1$, $B_2$) bedingten Meßfehlers korrigiertes Ausgangssignal ($S_{out}$, $S_{out}'$) liefert.

FIG.1

EP 0 764 839 A1

## Beschreibung

Die Erfindung betrifft Druck- oder Differenzdruck-meßgeräte mit flüssigkeitsgefüllten Druckmitteln.

Druck- oder Differenzdruckmeßgeräte mit Druckmitteln werden bevorzugt eingesetzt bei Anwendungen in der Lebensmittelindustrie, da dort aus Hygienegründen frontbündige Druckaufnehmer, z.B. aus nichtrostendem Stahl, besonders geeignet sind, bei Anwendungen in der chemischen Industrie, da dort häufig durch die Medien, deren Druck zu messen ist, besondere Anforderungen an die chemische Beständigkeit der mediums-berührten Bauteile bestehen, bei Anwendungen mit abrasiven Medien, da dort besondere Anforderungen an die mechanische Beständigkeit der mediums-berührten Bauteile bestehen, und bei Anwendungen bei besonders hohen bzw. niedrigen Temperaturen.

Der Einsatzbereich von Druck- oder Differenzdruckmeßgeräten mit flüssigkeitsgefüllten Druckmitteln ist jedoch beschränkt, da durch die thermische Ausdehnung der Flüssigkeit Meßfehler entstehen. Um den Einsatzbereich von flüssigkeitsgefüllten Druckmitteln zu vergrößern ist es notwendig, diesen temperaturbedingten Meßfehler zu korrigieren und/oder zu kompensieren.

In der US-A 4,722,228 ist ein Druckmeßgerät beschrieben, welches umfaßt:

- Eine Meßanordnung mit

  -- einem Gehäuse,
  -- einem in dem Gehäuse angeordneten Sensorelement, das ein einem auf es einwirkenden Differenzdruck entsprechendes Signal liefert,

- einen mit der Meßanordnung verbundenen Druckmittler mit

  -- einer mit dem Druck zu beaufschlagenden Membran,
  -- einer an der Membran angeordneten Kammer,
  -- einer ersten dünnen, die Kammer mit einem ersten Druckanschluß des Sensorelements verbindenden Leitung,
  -- einer zweiten entlang der ersten Leitung angeordneten Leitung,

    --- deren eines Ende verschlossen und nahe der Kammer angeordnet ist und
    --- deren anderes Ende mit einem zweiten Druckanschluß des Sensorelements verbunden ist,

  -- einer die Kammer und die erste Leitung vollständig ausfüllenden und den Druck von der Membran auf den ersten Druckanschluß des Sensorelement übertragenden Füllflüssigkeit und
  -- einer die zweite Leitung vollständig ausfüllenden und einen temperaturabhängigen Bezugsdruck auf den zweiten Druckanschluß des Sensorelements übertragenden Füllflüssigkeit, und

- eine Auswerteeinheit,

  -- die das Signal des Sensorelements einer weiteren Verarbeitung und/oder Anzeige zugänglich macht.

Weiterhin ist in der genannten US-A 4,722,228 ein Differenzdruckmeßgerät beschrieben, welches umfaßt:

- Eine Meßanordnung mit

  -- einem Gehäuse,
  -- einem in dem Gehäuse angeordneten Sensorelement, das ein einem auf es einwirkenden Differenzdruck entsprechendes Signal liefert,

- zwei mit der Meßanordnung verbundene Druckmittler mit

  -- jeweils einer mit einem jeweiligen Druck zu beaufschlagenden Membran,
  -- jeweils einer an der Membran angeordneten Kammer,
  -- jeweils einer dünnen, die Kammer mit einem jeweiligen ersten Druckanschluß des Sensorelements verbindenden Leitung,
  -- jeweils einer zweiten entlang der ersten Leitung angeordneten Leitung,

    --- deren eines Ende verschlossen ist und nahe der jeweiligen Kammer angeordnet ist und
    --- deren anderes Ende mit einem jeweiligen zweiten Druckanschluß des Sensorelements verbunden ist,

  -- einer die jeweilige Kammer und die jeweilige erste Leitung vollständig ausfüllenden und den Druck von der jeweiligen Membran auf den jeweiligen ersten Druckanschluß des Sensorelements übertragenden Füllflüssigkeit und
  -- einer die jeweilige zweite Leitung vollständig ausfüllenden und einen temperaturabhängigen Bezugsdruck auf den jeweiligen zweiten Druckanschluß des Sensorelements übertragenden Füllflüssigkeit, und

- eine Auswerteeinheit,

  -- die das Signal des Sensorelemnts einer weiteren Verarbeitung und/oder Anzeige zugänglich macht.

Der temperaturbedingte Meßfehler wird bei den vorbeschriebenen Varianten also jeweils durch einen entsprechenden temperaturabhängigen, auf das Sensorelement einwirkenden Referenzdruck kompensiert.

Ein Nachteil solcher Druck- oder Differenzdruckmeßgeräte besteht darin, daß jeder Druckmittler zwei flüssigkeitsgefüllte Leitungen aufweisen muß. Die Befüllung solcher Leitungen muß blasenfrei erfolgen und bedingt daher einen erheblichen fertigungstechnischen Aufwand.

Der größte Anteil der Flüssigkeit befindet sich in den Leitungen. Während in einer Kammer üblicherweise ein Flüssigkeitsvolumen von 3 cm$^3$ vorhanden ist, weist eine 10 m lange Leitung mit einem Durchmesser von 2 mm ein Innenvolumen von 31,4 cm$^3$ auf.

Ein weiterer Nachteil der genannten Druck- oder Differenzdruckmeßgeräte besteht darin, daß auf jede Membran die temperaturbedingte Ausdehnung der Flüssigkeit aus der eigentlichen Leitung und aus der den Referenzdruck liefernden Leitung rückwirkt. Dadurch ist der Temperaturbereich, in dem solche Meßgeräte einsetzbar sind, zusätzlich eingeschränkt. Um den Temperaturbereich eines vergleichbares Geräts ohne einen jeweiligen Referenzdruck liefernde Leitungen abdecken zu können, ist ein erheblich größerer Membrandurchmesser erforderlich.

Ein weiterer Nachteil besteht darin, daß für ein Druckmeßgerät ein Sensorelement mit zwei Druckanschlüssen und für ein Differenzdruckmeßgerät ein Sensorelement mit vier Druckanschlüssen nötig ist.

Dieser große mechanische Aufwand kann erheblich reduziert werden, indem eine elektrische Meßgröße zur Korrektur des gemessenen Drucks oder Differenzdrucks herangezogen wird.

So ist es beispielsweise möglich, einen Temperatursensor an dem Druckmittler anzuordnen und dessen Meßwert zur Korrektur des Druckmeßwertes einzusetzen.

Hierbei bleibt jedoch der tatsächliche Temperaturverlauf entlang der Anschlußleitung zwischen dem Sensorelement und dem Druckmittler unberücksichtigt. Ist z.B. der Temperatursensor einer sehr hohen bzw. sehr niedrigen Temperatur ausgesetzt, der überwiegende Teil der Anschlußleitung jedoch nicht, so ist eine Korrektur zwangsläufig fehlerbehaftet.

Es ist eine Aufgabe der Erfindung, ein Druck- oder Differenzdruckmeßgerät anzugeben, das ein bezgl. eines durch die thermische Ausdehnung der Füllflüssigkeit bedingten Meßfehlers korrigiertes Ausgangssignal liefert und das insb. mit geringem fertigungstechnischem Aufwand herstellbar ist.

Zur Lösung dieser Aufgabe besteht eine erste Variante der Erfindung in einem Druckmeßgerät, umfassend

- eine Meßanordnung mit

-- einem Gehäuse,
-- einem in dem Gehäuse angeordneten Sensorelement, das ein einem auf es einwirkenden Druck entsprechendes Sensorsignal liefert,

- einen mit der Meßanordnung verbundenen Druckmittler mit

-- einer mit dem Druck zu beaufschlagenden Membran,
-- einer an der Membran angeordneten Kammer,
-- einer dünnen, die Kammer mit dem Sensorelement verbindenden Leitung,
-- einem entlang der Leitung angeordneten temperaturabhängigen Widerstandsdraht,

--- dessen Länge proportional zum Innenvolumen der Leitung ist, und

-- einer die Kammer und die Leitung vollständig ausfüllenden und den Druck von der Membran auf das Sensorelement übertragenden Füllflüssigkeit, und

- eine Auswerteeinheit,

-- die den Gesamtwiderstand des Widerstandsdrahtes ermittelt,
-- die aus dem Gesamtwiderstand und aus dem Sensorsignal ein bezüglich eines durch die thermische Ausdehnung der Füllflüssigkeit bedingten Fehlers korrigiertes Ausgangssignal erzeugt und
-- die dieses Ausgangssignal einer weiteren Verarbeitung und/oder Anzeige zugänglich macht.

Gemäß einer Weiterbildung der ersten Variante weist der Widerstandsdraht einen an der Kammer angeordneten zusätzlichen Abschnitt auf, dessen Länge proportional zu dem flüssigkeitsgefüllten Volumen der Kammer ist.

Gemäß einer Ausgestaltung der ersten Variante ordnet die Auswerteeinheit dem Gesamtwiderstand ein Korrektursignal zu und erzeugt ein korrigiertes Ausgangsignal, das der Differenz zwischen dem Sensorsignal und dem Korrektursignal entspricht.

Gemäß einer weiteren Ausgestaltung der ersten Lösungsvariante erfolgt die Zuordnung des jeweiligen Gesamtwiderstandes zu dem jeweiligen Korrektursignal gemäß einer in einem Speicher abgelegten Kennlinie, wobei diese ein Maß für eine temperaturbedingte Abweichung zwischen dem auf das Sensorelement einwirkenden Druck und einem auf die Membran einwirkenden Referenzdruck als Funktion des ebenfalls temperaturabhängigen Gesamtwiderstands angibt.

Gemäß einer anderen Ausgestaltung der ersten Lösungsvariante ist der Widerstandsdraht derart entlang der Leitung angeordnet, daß ein entlang eines beliebigen Teilabschnitts der Leitung angeordneter Teilabschnitt des Widerstandsdrahts eine Länge aufweist, die proportional zu dem Innenvolumen des Teilabschnitts der Leitung ist.

Zur Lösung der obigen Aufgabe besteht eine zweite Variante der Erfindung in einem Differenzdruckmeßgerät, umfassend

- eine Meßanordnung mit

  -- einem Gehäuse,
  -- einem in dem Gehäuse angeordneten Sensorelement, das ein einem auf es einwirkenden Differenzdruck entsprechendes Sensorsignal liefert,

- zwei mit der Meßanordnung verbundene Druckmittler mit

  -- jeweils einer mit einem jeweiligen Druck zu beaufschlagenden Membran,
  -- jeweils einer an der Membran angordneten Kammer,
  -- jeweils einer dünnen, die Kammer mit einem jeweiligen Druckanschluß des Sensorelements verbindenden Leitung,
  -- jeweils einem entlang der Leitung angeordneten temperaturabhängigen Widerstandsdraht,

    --- dessen Länge jeweils proportional zum Innenvolumen der jeweiligen Leitung ist, und

  -- jeweils einer die jeweilige Kammer und die jeweilige Leitung vollständig ausfüllenden und den jeweiligen Druck von der jeweiligen Membran auf das Sensorelement übertragenden Füllflüssigkeit, und

- eine Auswerteeinheit,

  -- die die Gesamtwiderstände der Widerstandsdrähte ermittelt,
  -- die aus den beiden Gesamtwiderständen und aus dem Sensorsignal ein bezüglich eines durch die thermischen Ausdehnungen der Füllflüssigkeiten bedingten Fehlers korrigiertes Ausgangssignal erzeugt und
  -- die dieses Ausgangssignal einer weiteren Verarbeitung und/oder Anzeige zugänglich macht.

Gemäß einer Weiterbildung der zweiten Variante weisen die Widerstandsdrähte jeweils einen an der Kammer angeordneten zusätzlichen Abschnitt auf, dessen Länge jeweils proportional zu dem jeweiligen flüssigkeitsgefüllten Volumen der entsprechenden Kammer ist.

Gemäß einer Ausgestaltung der zweiten Variante ordnet die Auswerteeinheit jedem der beiden Gesamtwiderstände jeweils ein Korrektursignal zu, bestimmt die Differenz zwischen den beiden Korrektursignalen und erzeugt ein korrigiertes Ausgangsignal, das der Differenz zwischen dem Sensorsignal und der Differenz der Korrektursignale entspricht.

Gemäß einer weiteren Ausgestaltung der zweiten Variante erfolgt die Zuordnung des jeweiligen Gesamtwiderstandes zu dem jeweiligen Korrektursignal gemäß einer in einem Speicher abgelegten Kennlinie, wobei die Kennlinie ein Maß für eine temperaturbedingte Abweichung zwischen dem von der jeweiligen Leitung dem Sensorelement zugeführten Druck und einem auf die entsprechende Membran einwirkenden Referenzdruck als Funktion des entsprechenden ebenfalls temperaturabhängigen Gesamtwiderstands angibt.

Gemäß einer anderen Ausgestaltung der zweiten Variante sind die Widerstandsdrähte derart entlang den Leitungen angeordnet, daß ein entlang eines beliebigen Teilabschnitts einer Leitung angeordneter Teilabschnitt eines Widerstandsdrahts eine Länge aufweist, die proportional zu dem Innenvolumen des Teilabschnitts der Leitung ist.

Ein Vorteil eines solchen Druck- oder Differenzdruckmeßgeräts besteht darin, daß der Widerstandsdraht seinen Widerstand entsprechend dem durch den Einsatzort vorgegebenen Temperaturprofil ändert. Dadurch ist auch dann eine korrekte Fehlerkompensation möglich, wenn z.B. sehr steile Temperaturgradienten längs der flüssigkeitsgefüllten Leitung auftreten oder nur sehr kurze Teilstücke der Leitung extrem hohen oder niedrigen Temperaturen ausgesetzt sind.

Die Erfindung und weitere Vorteile werden nun anhand der Figuren der Zeichnung, in der ein Ausführungsbeispiel eines Druckmeßgeräts und ein Ausführungsbeispiel eines Differenzdruckmeßgeräts dargestellt sind, näher erläutert; gleiche Elemente sind in den Figuren mit gleichen Bezugszeichen versehen.

Fig. 1 zeigt eine schematische Darstellung eines Druckmeßgeräts mit einem Druckmittler,

Fig. 2 zeigt eine schematische Darstellung eines Differenzdruckmeßgeräts mit zwei Druckmittlern, und

Fig. 3 zeigt einen Teilabschnitt eines Widerstandsdraht in der Umgebung der Kammer des Druckmittlers.

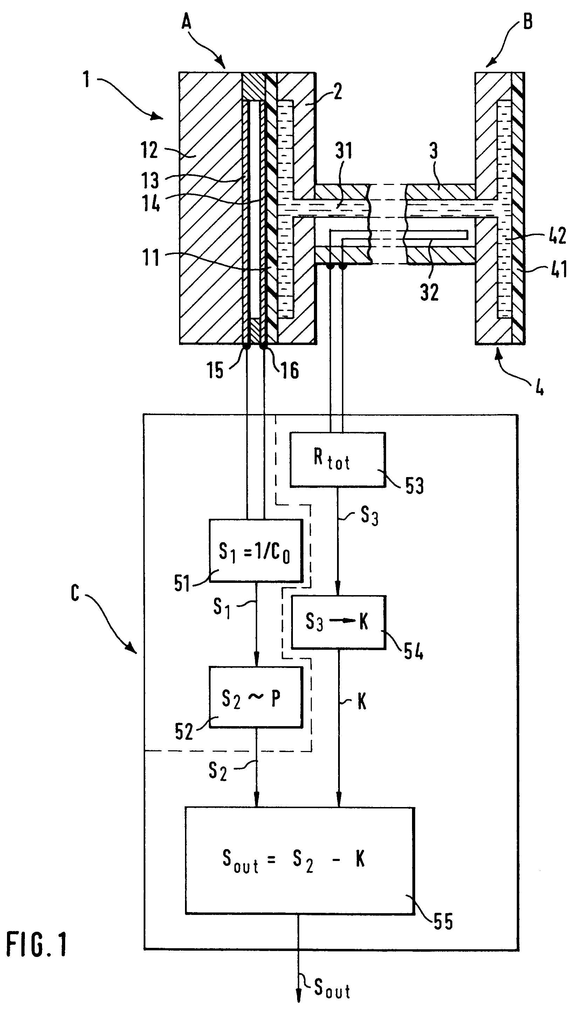

Das in Fig. 1 dargestellte Ausführungsbeispiel eines Druckmeßgeräts umfaßt drei Komponenten: eine Meßanordnung A, einen mit der Meßanordnung verbundenen Druckmittler B und eine Auswerteeinheit C.

Das Kernstück der Meßanordnung A ist ein Sensorelement 1, das z.B. in einem hier nicht dargestellten Gehäuse angeordnet ist. Das Sensorelement 1 ist beispielsweise eine übliche kapazitive, zylindrische Druckmeßzelle, die aus einer Sensormembran 11 und einem Grundkörper 12 besteht, die durch ein Verbindungsmaterial, z.B. ein Aktivhartlot, in einem definierten Abstand voneinander gehalten und miteinander hermetisch dicht verbunden sind. Die mit Elektrodenmaterial beschichteten Innenflächen der Sensormembran 11 und des Grundkörpers 12 bilden mindestens einen Meßkondensator, dessen Kapazität $C_0$ von der Durchbiegung der Sensormembran 11 abhängt und somit ein Maß für den auf die Sensormembran 11 einwirkenden Druck ist. Die beiden Elektroden 13, 14 des Meßkondensator weisen jeweils eine Anschlußstelle 15, 16 auf, zwischen denen die Kapazität $C_0$ meßbar ist.

Aber auch andere Arten von Sensorelementen, z.B. Drucksensoren, die mit Dehnungsmeßstreifen oder mit piezoresistiven Elementen arbeiten, sind bei der Erfindung einsetzbar. Diesen Drucksensoren ist gemeinsam, daß sie einen elektrischen Parameter aufweisen, der von dem einwirkenden Druck abhängt.

Die Meßanordnung A ist über eine Anschlußleitung 3 mit dem Druckmittler B verbunden. Hierzu ist am Sensorelement 1 eine geeignete, in Fig. 1 lediglich schematisch dargestellte Anschlußvorrichtung 2 vorgesehen.

Der Druckmittler B weist eine Druckaufnahmeeinheit 4, bestehend aus einer mit dem Druck zu beaufschlagenden Membran 41 und einer daran angeordneten Kammer 42, auf, welche, z.B. mittels einer nicht dargestellten Flanschverbindung, am Meßort zu befestigen ist.

In der Anschlußleitung 3 befindet sich eine dünne, die Kammer 42 mit dem Sensorelement 1 verbindende Leitung 31. Der gesamte durch die Kammer 42, die Leitung 31 und das Sensorelement 1 begrenzte, abgeschlossene Hohlraum ist vollständig mit einer geeigneten Füllflüssigkeit, z.B. einem möglichst inkompressiblen Öl, ausgefüllt, die den Druck von der Membran 41 auf das Sensorelement 1 überträgt.

Zusätzlich ist in der Anschlußleitung 3 entlang der Leitung 31 ein Widerstandsdraht 32 angeordnet, dessen Widerstand sich in Abhängigkeit von der Temperatur ändert und dessen Länge proportional zum Innenvolumen der Leitung ist. Dabei entspricht der Gesamtwiderstand $R_{tot}$ des Widerstandsdrahts der Summe der Teilwiderstände der einzelnen Teilabschnitte, wobei die Teilwiderstände jeweils ein Maß für die lokale Temperatur und somit ein Maß für die lokale Volumenausdehnung der Füllflüssigkeit sind.

Damit ist über den Gesamtwiderstand ein Maß für die gesamte Volumenänderung gegeben. Dies ist besonders dann wichtig, wenn sehr lange Anschlußleitungen verwendet werden und/oder der Temperaturverlauf entlang der Anschlußleitung 3 starke Gradienten aufweist.

Die Aufnahme der elektrischen Meßgrößen $C_0$ und $R_{tot}$ und deren Weiterverarbeitung findet in der Auswerteeinheit C statt. Diese enthält eine Schaltung zur Auswertung des erwähnten druckabhängigen Parameters. In Fig. 1 ist diese Schaltung eine Kapazitätsmeßschaltung 51, die zur Messung der Kapazität $C_0$ mit den Anschlußstellen 15, 16 verbunden ist. Diese ist so ausgebildet, daß sie am Ausgang ein Meßsignal $S_1$ abgibt, das dem reziproken Wert $1/C_0$ der gemessenen Kapazität $C_0$ entspricht.

Dieses Meßsignal $S_1$ wird einer ersten Rechenschaltung 52 zugeführt, die daraus einen entsprechenden unkorrigierten Druckmeßwert $P_0$ ermittelt. Dies erfolgt beispielsweise gemäß der folgenden Gleichung:

$$S_1 = a + b\,P_0$$

wobei a eine Nullpunktverschiebung des Druckmeßwerts und b eine Korrektur der Druckmeßwertspanne bedeuten. Beide Werte a, b sind sensorspezifische Kenngrößen die in einem Speicher abgelegt sind.

Die erste Rechenschaltung 52 liefert ein Sensorsignal $S_2$, das dem berechneten unkorrigierten Druckmeßwert $P_0$ proportional ist.

Gleichermaßen kann das Sensorsignal $S_2$ natürlich auch in einer separaten Schaltung erzeugt werden, die beispielsweise auf dem Sensorelement 1 angeordnet ist, und von dort der Auswerteeinheit C zugeführt wird. Dies ist in Fig. 1 durch eine gestrichelte Linie angedeutet.

Weiterhin enthält die Auswerteeinheit C eine Widerstandsmeßschaltung 53, die zur Messung des Gesamtwiderstands $R_{tot}$ mit dem Widerstandsdraht 32 verbunden ist und ein Meßsignal $S_3$ abgibt, das dem Gesamtwiderstands $R_{tot}$ entspricht.

Dieses Meßsignal $S_3$ wird einer zweiten Rechenschaltung 54 zugeführt, die diesem ein Korrektursignal K gemäß einer in einem Speicher abgelegten Kennlinie zuordnet und abgibt.

Die Kennlinie gibt die temperaturbedingte Abweichung zwischen dem auf das Sensorelement einwirkenden Druck und einem auf die Membran einwirkenden Referenzdruck als Funktion des ebenfalls temperaturabhängigen Gesamtwiderstands an.

Das Sensorsignal $S_2$ der ersten Rechenschaltung 52 und das Korrektursignal K der zweiten Rechenschaltung 54 liegen an einer Subtrahierschaltung 55, die ein Ausgangssignal $S_{out}$ erzeugt, das der Differenz der beiden Signale $S_{out} = S_2 - K$ entspricht und somit dem bezüglich des durch die thermische Ausdehnung der Füllflüssigkeit bedingten Fehlers korrigierten Druckmeßwert P proportional ist. Dieses Ausgangssignal steht zur weiteren Verarbeitung und/oder Anzeige zur Verfügung.

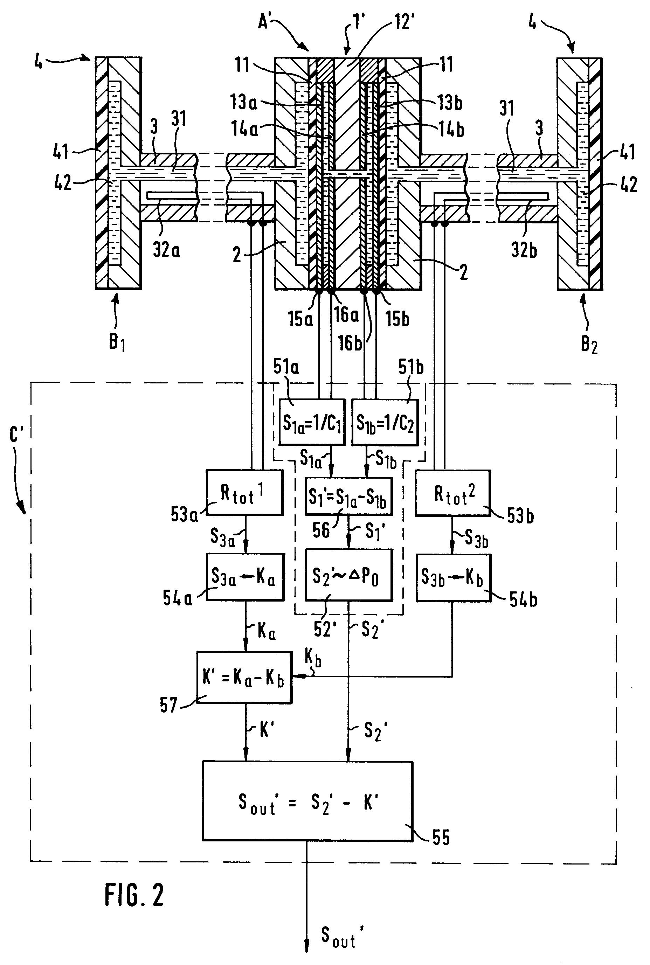

In Fig. 2 ist ein Ausführungsbeispiel eines Differenzdruckmeßgeräts schematisch dargestellt.

Das Differenzdruckmeßgerät umfaßt vier Komponenten: eine Meßanordnung A', zwei mit der Meßanordnung verbundene Druckmittler $B_1$, $B_2$ und eine Auswerteeinheit C'.

Kernstück der Meßanordnung A' ist wie in Fig. 1 ein Sensorelement 1'. Dies ist beispielsweise eine zylindrische, kapazitive Differenzdruckmeßzelle, bestehend aus einem Grundkörper 12' und zwei an dessen gegenüberliegenden Seiten angeordneten Sensormembranen 11. Die Innenflächen der Sensormembranen 11 und die Kreisflächen des Grundkörpers 12' bilden jeweils eine Kammer, haben jeweils einen Abstand voneinander, sind mit Elektrodenmaterial beschichtet und bilden zwei Kondensatoren, deren Kapazität $C_1$, $C_2$ von der Durchbiegung der jeweiligen Sensormembran 11 abhängt und damit durch einen an der jeweiligen Sensormembran 11 liegenden, sie durchbiegenden Druck bestimmt ist.

Die beiden Elektroden 13a, 14a und 13b, 14b des jeweiligen Kondensator weisen jeweils eine Anschlußstelle 15a, 16a und 15b, 16b auf, und die jeweilige Kapazität $C_1$, $C_2$ ist zwischen den jeweiligen beiden Anschlußstellen 15a, 16a und 15b, 16b meßbar.

Beide Kammern stehen über eine rohrartige Leitung miteinander in Verbindung. Das Innenvolumen der Kammern und der Leitung ist mit einer möglichst inkompressiblen Flüssigkeit, z.B. einem geeigneten Öl, gefüllt. Dadurch sind die beiden Sensormembranen 11 mechanisch gekoppelt. Die Differenz der Kehrwerte der beiden Kapazitäten $C_1$, $C_2$ entspricht dem auf die Differenzdruckmeßzelle einwirkenden Differenzdruck.

Auch hier sind den oben erwänten anderen Arten von Druckmeßzellen entsprechende Differenzdruckmeßzellen einsetzbar.

Die Meßanordnung A' ist über zwei Anschlußleitungen 3 mit den beiden Druckmittlern $B_1$, $B_2$ verbunden. Für eine Beschreibung des Aufbaus und der Anordnung der Druckmittler wird hier auf die Beschreibung zu Fig. 1 verwiesen. Die beiden Widerstandsdrähte sind mit 32a und 32b bezeichnet.

Die Aufnahme der elektrischen Meßgrößen $C_1$, $C_2$ und $R_{tot}^1$, $R_{tot}^2$ und deren Weiterverarbeitung findet in der Auswerteeinheit C' statt.

Diese enthält eine erste Kapazitätsmeßschaltung 51a, die zur Messung der Kapazität $C_1$ mit den Anschlußstellen 15a, 16a verbunden ist, und eine zweite Kapazitätsmeßschaltung 51b, die zur Messung der Kapazität $C_2$ mit den Anschlußstellen 15b, 16b verbunden ist. Beide sind so ausgebildet, daß sie am Ausgang jeweils ein Meßsignal $S_{1a}$, $S_{1b}$ abgeben, das dem reziproken Wert $1/C_1$, $1/C_2$ der jeweiligen gemessenen Kapazität $C_1$, $C_2$ entspricht.

Die beiden Meßsignale $S_{1a}$, $S_{1b}$ liegen an einer Subtrahierschaltung 56, die ein Ausgagnssignal $S_1'$ liefert, das der Differenz der beiden Eingangssignale entspricht:

$$S_1' = S_{1a} - S_{1b}.$$

Dieses Meßsignal $S_1'$ wird einer ersten Rechenschaltung 52' zugeführt, die daraus einen entsprechenden unkorrigierten Differenzdruckmeßwert $\Delta P_0$ ermittelt. Dies erfolgt beispielsweise gemäß der folgenden Gleichung:

$$S_1' = c + d \, \Delta P_0$$

wobei c eine Nullpunktverschiebung des Differenzdruckmeßwerts und d eine Korrektur der Differenzdruckmeßwertspanne bedeuten. Beide Werte c, d sind sensorspezifische Kenngrößen, die in einem Speicher abgelegt sind.

Diese erste Rechenschaltung 52' liefert ein Sensorsignal $S_2'$, das dem berechneten unkorrigierten Differenzdruckmeßwert $\Delta P_0$ proportional ist.

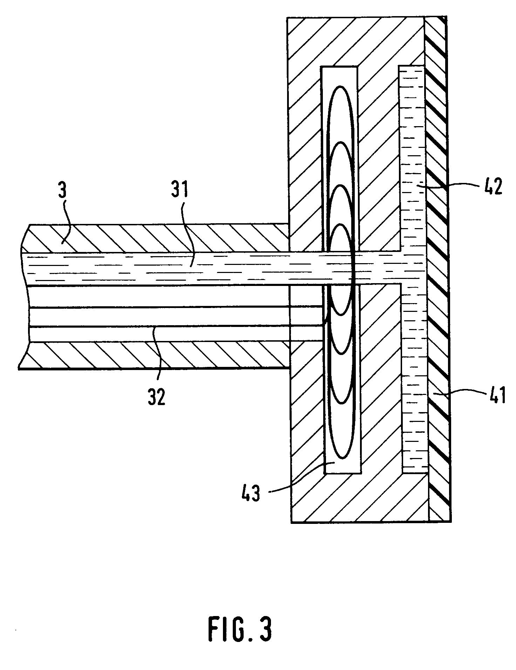

Gleichermaßen kann das Sensorsignal $S_2'$ natürlich auch in einer separaten Schaltung erzeugt werden, die beispielsweise auf dem Sensorelement 1' angeordnet ist, und von dort der Auswerteeinheit C' zugeführt werden. Eine solche separate Schaltung ist in Fig. 3 durch eine gestrichelte Linie angedeutet.

Weiterhin enthält die Auswerteeinheit C' zwei Widerstandsmeßschaltungen 53a, 53b, die zur Messung der Gesamtwiderstände $R_{tot}^1$, $R_{tot}^2$ mit dem jeweiligen Widerstandsdraht 32a, 32b verbunden sind und so ausgebildet sind, daß sie am Ausgang jeweils ein Meßsignal $S_{3a}$, $S_{3b}$ abgeben, das dem jeweiligen Gesamtwiderstands $R_{tot}^1$, $R_{tot}^2$ entspricht.

Diese Meßsignale $S_{3a}$, $S_{3b}$ werden jeweils einer Rechenschaltung 54a, 54b zugeführt, die diesen jeweils ein Korrektursignal $K_a$, $K_b$ gemäß einer in einem Speicher abgelegten Kennlinie zuordnet und ausgibt.

Die Kennlinie gibt die temperaturbedingte Abweichung zwischen dem von der jeweiligen Leitung dem Sensorelement zugeführten Druck und einem auf die entsprechende Membran einwirkenden Referenzdruck als Funktion des entsprechenden ebenfalls temperaturabhängigen Gesamtwiderstands an.

Die beiden Korrektursignale $K_a$, $K_b$ liegen an einer Subtrahierschaltung 57, die wiederum ein Ausgangssignal K' liefert, das der Differenz der beiden Eingangssignale entspricht: $K' = K_a - K_b$.

Das von der ersten Rechenschaltung 52' gelieferte Sensorsignal $S_2'$ und das Ausgangssignal K' des Subtrahierers 57 liegen an einer Subtrahierschaltung 55, die ein Ausgangssignal $S_{out}'$ erzeugt, das der Differenz der beiden Signale $S_{out}' = S_2' - K'$ entspricht und somit dem bezüglich des durch die thermische Ausdehnung der Füllflüssigkeit bedingten Fehlers korrigierten Differenzdruckmeßwert $\Delta P$ proportional ist. Analog zu dem Ausführungsbeispiel von Fig. 1 steht dieses Ausgangssignal zu einer weiteren Verarbeitung und/oder Anzeige zur Verfügung.

In den beiden Ausführungsbeispielen von Fig. 1 und Fig.2 sind die Widerstandsdrähte 32 bzw. 32a, 32b jeweils derart entlang der entsprechenden Leitung 31 angeordnet ist, daß ein entlang eines beliebigen Teilabschnitts der Leitung 31 angeordneter Teilabschnitt des Widerstandsdrahts 32 bzw. 32a, 32b eine Länge aufweist, die proportional zu dem Innenvolumen des Teilabschnitts der Leitung 31 ist.

Weist die Leitung 31 jedoch einen veränderlichen Querschnitt auf, so ist es günstiger, die Leitung mit dem Widerstandsdraht zu umwickeln. Leitungsabschnitte mit einem größeren Innenquerschnitt weisen dabei eine entsprechend höhere Windungszahl pro Leitungslängeneinheit auf als solche mit einem niedrigeren Innenquerschnitt, so daß ein entlang eines beliebigen Teilabschnitts der Leitung 31 angeordneter Teilabschnitt des Widerstandsdrahts 32 bzw. 32a, 32b wiederum eine Länge aufweist, die proportional zu dem Innenvolumen des Teilabschnitts der Leitung 31 ist.

Insbesondere bei Druckmittlern, die einen großen Membrandurchmesser aufweisen, befindet sich ein beträchtlicher Anteil der Füllflüssigkeit in der an der Membran angeordneten Kammer 42. In der Regel ist gerade dieser Anteil der Füllflüssigkeit den höchsten auftretenden Temperaturen ausgesetzt. Es gilt daher, die temperaturbedingte Volumenänderung dieses Anteils der Füllflüssigkeit ebenfalls zu erfassen.

Hierzu weist der in Fig. 3 dargestellte Druckmittler eines Druck- oder Differenzdruckmeßgeräts einen parallel zu der Kammer 42 angeordneten Hohlraum 43 auf, in dem ein zusätzlicher Abschnitt des Widerstandsdrahts 32 bzw. 32a, 32b angeordnet ist, dessen Länge proportional zu dem flüssigkeitsgefüllten Volumen der Kammer 42 ist. Der Widerstandsdraht 32 bzw. 32a, 32b ist spiralförmig in den Hohlraum 43 eingelegt.

Auf die gleiche Weise kann auch die Volumenausdehnung des in den Anschlußvorrichtungen 2 enthaltenen Flüssigkeitsvolumens in die Korrektur mit einbezogen werden.

Bei beiden Ausführungsbeispielen sind durch die Gesamtwiderstände $R_{tot}$, $R_{tot}^1$, $R_{tot}^2$ elektrische Meßgrößen gegeben, die zur Korrektur des Meßfehlers eingesetzt werden.

Da jeder Druckmittler lediglich einen einzigen Widerstandsdraht 32, 32a, 32b aufweisen muß, der in einer ohnehin vorhandenen Leitung 3 anzuordnen ist, ist der mechanische Aufwand sehr gering. Der schaltungstechnische Aufwand ist ebenfalls sehr gering, beschränkt er sich doch hauptsächlich auf die Messung von Widerständen.

Weiterhin genügt eine einzige Kennlinie pro Druckmittler, um die notwendigen Daten für eine Fehlerkorrektur zur Verfügung zu stellen.

Es ist auch möglich, bereits bestehende Druck- oder Differenzdruckmeßgeräte mit Widerstandsdrähten 32 bzw. 32a, 32b und einer entsprechenden Auswerteschaltung C, C' nachzurüsten.

**Patentansprüche**

1. Druckmeßgerät, umfassend

- eine Meßanordnung (A) mit

-- einem Gehäuse,
-- einem in dem Gehäuse angeordneten Sensorelement (1), das ein einem auf es einwirkenden Druck entsprechendes Sensorsignal ($S_2$) liefert,

- einen mit der Meßanordnung verbundenen Druckmittler (B) mit

-- einer mit dem Druck zu beaufschlagenden Membran (41),
-- einer an der Membran (41) angeordneten Kammer (42),
-- einer dünnen, die Kammer (42) mit dem Sensorelement (1) verbindenden Leitung (31),
-- einem entlang der Leitung (31) angeordneten temperaturabhängigen Widerstandsdraht (32),

--- dessen Länge proportional zum Innenvolumen der Leitung (31) ist, und

-- einer die Kammer (42) und die Leitung (31) vollständig ausfüllenden und den Druck von der Membran (41) auf das Sensorelement (1) übertragenden Füllflüssigkeit, und

- eine Auswerteeinheit (C),

-- die den Gesamtwiderstand ($R_{tot}$) des Widerstandsdrahtes (32) ermittelt,
-- die aus dem Gesamtwiderstand ($R_{tot}$) und aus dem Sensorsignal ($S_2$) ein bezüglich eines durch die thermische Ausdehnung der Füllflüssigkeit bedingten Fehlers korrigiertes Ausgangssignal ($S_{out}$) erzeugt und
-- die dieses Ausgangssignal ($S_{out}$) einer weiteren Verarbeitung und/oder Anzeige zugänglich macht.

2. Druckmeßgerät nach Anspruch 1, bei dem der Widerstandsdraht (32) einen an der Kammer (42) angeordneten zusätzlichen Abschnitt aufweist, dessen Länge proportional zu dem flüssigkeitsgefüllten Volumen der Kammer (42) ist.

3. Druckmeßgerät nach Anspruch 1 oder 2, bei dem die Auswerteeinheit (C) dem Gesamtwiderstand ($R_{tot}$) ein Korrektursignal (K) zuordnet und ein korrigiertes Ausgangsignal ($S_{out}$) erzeugt, das der Differenz zwischen dem Sensorsignal ($S_2$) und dem Korrektursignal (K) entspricht.

4. Druckmeßgerät nach Anspruch 3, bei dem die Zuordnung des jeweiligen Gesamtwiderstandes ($R_{tot}$) zu dem jeweiligen Korrektursignal (K) gemäß einer in einem Speicher abgelegten Kennlinie erfolgt, wobei diese ein Maß für eine temperaturbedingte Abweichung zwischen dem auf das Sensorelement (1) einwirkenden Druck und einem auf die Membran (41) einwirkenden Referenzdruck als Funktion des ebenfalls temperaturabhängigen Gesamtwiderstands ($R_{tot}$) angibt.

5. Druckmeßgerät nach Anspruch 1, bei dem der Widerstandsdraht (32) derart entlang der Leitung (31) angeordnet ist, daß ein entlang eines beliebigen Teilabschnitts der Leitung angeordneter Teilabschnitt des Widerstandsdrahts (32) eine Länge aufweist, die proportional zu dem Innenvolumen des Teilabschnitts der Leitung (31) ist.

6. Differenzdruckmeßgerät umfassend

 - eine Meßanordnung (A') mit

   -- einem Gehäuse,
   -- einem in dem Gehäuse angeordneten Sensorelement (1'), das ein einem auf es einwirkenden Differenzdruck entsprechendes Sensorsignal ($S_2$') liefert,

 - zwei mit der Meßanordnung verbundene Druckmittler ($B_1$, $B_2$) mit

   -- jeweils einer mit einem jeweiligen Druck zu beaufschlagenden Membran (41),
   -- jeweils einer an der Membran (41) angeordneten Kammer (42),
   -- jeweils einer dünnen, die Kammer (42) mit einem jeweiligen Druckanschluß des Sensorelements (1) verbindenden Leitung (31),
   -- jeweils einem entlang der Leitung (31) angeordneten temperaturabhängigen Widerstandsdraht (32a, 32b),

     --- dessen jeweilige Länge proportional zum jeweiligen Innenvolumen der jeweiligen Leitung (31) ist, und

   -- jeweils einer die jeweilige Kammer (42) und die jeweilige Leitung (31) vollständig ausfüllenden und den jeweiligen Druck von der jeweiligen Membran (41) auf das Sensorelement (1') übertragenden Füllflüssigkeit, und

 - eine Auswerteeinheit (C'),

   -- die die Gesamtwiderstände ($R_{tot}^1$, $R_{tot}^2$) der Widerstandsdrähte (32a, 32b) ermittelt,
   -- die aus den beiden Gesamtwiderständen ($R_{tot}^1$, $R_{tot}^2$) und aus dem Sensorsignal ($S_2$') ein bezüglich eines durch die thermischen Ausdehnungen der Füllflüssigkeiten bedingten Fehlers korrigiertes Ausgangssignal ($S_{out}$') erzeugt und
   -- die dieses Ausgangssignal ($S_{out}$') einer weiteren Verarbeitung und/oder Anzeige zugänglich macht.

7. Differenzdruckmeßgerät nach Anspruch 6, bei dem die Widerstandsdrähte (32a, 32b) jeweils einen an der Kammer (42) angeordneten zusätzlichen Abschnitt aufweisen, dessen Länge jeweils proportional zu dem jeweiligen flüssigkeitsgefüllten Volumen der entsprechenden Kammer (42) ist.

8. Differenzdruckmeßgerät nach Anspruch 6 oder 7, bei dem die Auswerteeinheit (C') jedem der beiden Gesamtwiderstände ($R_{tot}^1$, $R_{tot}^2$) jeweils ein Korrektursignal ($K_a$, $K_b$)zuordnet, die Differenz (K') zwischen den beiden Korrektursignalen ($K_a$, $K_b$) bestimmt und ein korrigiertes Ausgangssignal ($S_{out}$')erzeugt, das der Differenz zwischen dem Sensorsignal ($S_2$') und der Differenz der Korrektursignale (K') entspricht.

9. Differenzdruckmeßgerät nach Anspruch 8, bei dem die Zuordnung des jeweiligen Gesamtwiderstandes ($R_{tot}^1$, $R_{tot}^2$) zu dem jeweiligen Korrektursignal ($K_a$, $K_b$) gemäß einer in einem Speicher abgelegten Kennlinie erfolgt, wobei die Kennlinie ein Maß für eine temperaturbedingte Abweichung zwischen dem von der jeweiligen Leitung (31) dem Sensorelement (1') zugeführten Druck und einem auf die entsprechende Membran (41) einwirkenden Referenzdruck als Funktion des entsprechenden ebenfalls temperaturabhängigen Gesamtwiderstands ($R_{tot}^1$, $R_{tot}^2$) angibt.

10. Differenzdruckmeßgerät nach Anspruch 6, bei dem die Widerstandsdrähte (32a, 32b) derart entlang den Leitungen (31) angeordnet sind, daß ein entlang eines beliebigen Teilabschnitts einer Leitung (31) angeordneter Teilabschnitt eines Widerstandsdrahts (32a, 32b) eine Länge aufweist, die proportional zu dem Innenvolumen des Teilabschnitts der Leitung (31) ist.

A     B

1    2

12
13
14

31    3

11    42

32    41

15   16    4

$R_{tot}$

53

$S_3$

$S_1 = 1/C_0$

51

$S_1$

$S_3 \longrightarrow K$

54

C

$S_2 \sim P$

52

K

$S_2$

$S_{out} = S_2 - K$

55

FIG.1

$S_{out}$

9

FIG. 2

FIG. 3

**Europäisches Patentamt**

# EUROPÄISCHER RECHERCHENBERICHT

Nummer der Anmeldung

EP 95 11 4938

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 071 962 (THE FOXBORO CO.) <br> * Ansprüche 1-10 * <br> --- | 1,6 | G01L19/04 <br> G01L9/00 |
| A | DE-A-38 39 864 (HITACHI, LTD.) <br> * Spalte 3 - Spalte 4 * <br> --- | 1,6 | |
| A | US-A-4 986 127 (S. SHIMADA ET AL.) <br> * Spalte 6 - Spalte 8 * <br> --- | 1,6 | |
| A | DE-A-28 23 875 (AMERICAN CHAIN & CABLE CO., INC.) <br> * Ansprüche 7-28 * <br> --- | 1,6 | |
| A | DE-A-35 04 329 (PHILIPS PATENTVERWALTUNG GMBH.) <br> * Seite 6 - Seite 12 * <br> ----- | 1 | |

|  | RECHERCHIERTE SACHGEBIETE (Int.Cl.6) |
|---|---|
|  | G01L <br> G01G |

Der vorliegende Recherchenbericht wurde für alle Patentansprüche erstellt

| Recherchenort | Abschlußdatum der Recherche | Prüfer |
|---|---|---|
| BERLIN | 22.Februar 1996 | Dietrich, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P04C03)